# FASCICULE DE BREVET EUROPEEN

(11) **EP 4 285 157 B1**
(45) Date de publication et mention de la délivrance du brevet: **12.08.2026**
(21) Numéro de dépôt: 22705719.7
(22) Date de dépôt: 28.01.2022
(51) Int. Cl.: G01S 19/22

(54) **DISPOSITIF DE DÉTECTION DE MULTITRAJETS DE SIGNAUX GNSS, ET SYSTÈME DE GÉOLOCALISATION D'UN PORTEUR ET PROCÉDÉ DE DÉTECTION DE MULTITRAJETS ASSOCIÉS**
GNSS-SIGNAL-MEHRWEGERKENNUNGSVORRICHTUNG SOWIE ZUGEHÖRIGES TRÄGERGEOLOKALISIERUNGSSYSTEM UND MEHRWEGERKENNUNGSVERFAHREN
GNSS SIGNAL MULTIPATH DETECTION DEVICE, AND ASSOCIATED CARRIER GEOLOCATION SYSTEM AND MULTIPATH DETECTION METHOD

(30) Priorité: 29.01.2021 FR 2100867
(43) Date de publication de la demande: 06.12.2023
(73) Titulaire: THALES, 92400 Courbevoie (FR)
(72) Inventeur: DEPRAZ, David, 26000 VALENCE (FR); MEHLEN, Christian, 26000 VALENCE (FR)
(74) Mandataire: Lavoix
(86) Numéro de dépôt international: PCT/EP2022/052011
(87) Numéro de publication internationale: WO 2022/162127

(56) Documents cités:
- WO-A1-2017/022391
- US-A1- 2013 335 264
- US-B1- 8 164 514

## Description

La présente invention concerne un dispositif de détection de multitrajets de signaux GNSS.

La présente invention concerne également un système de géolocalisation et un procédé détection de multitrajets associés à ce dispositif de détection.

Le domaine de l'invention est celui des récepteurs GNSS.

En particulier, par un récepteur GNSS, on entend récepteur qui permet de recevoir des signaux GNSS, c'est-à-dire des signaux issus d'un ou de plusieurs systèmes de navigation par satellite (« Global Navigation Satellite System » en anglais) et à partir de ces signaux, de déterminer une solution de navigation.

Le domaine d'application de l'invention est celui des systèmes dans lesquels on cherche à garantir l'intégralité d'une solution de navigation déterminée par un récepteur GNSS de type « boite noire », c'est-à-dire récepteur GNSS dont on ne connait pas les caractéristiques a priori vis-à-vis des multitrajets.

Ceci est notamment le cas de certaines applications drones, rails ou automobiles, basées sur des récepteurs GNSS dont le comportement vis-à-vis des multitrajets ne fait pas l'objet de certification ou d'engagement du fabricant et qui évoluent dans un environnement a priori défavorable. Un tel environnement défavorable peut par exemple être formé par un environnement urbain, dans lequel les satellites peuvent être masqués par exemple par des bâtiments ou d'autres obstacles.

Plus généralement, dans le domaine de radionavigation GNSS, un signal de type « multitrajets » est un signal parasite qui est dû à la réflexion spéculaire d'un signal satellite sur le sol ou sur un bâtiment proche et qui se superpose ou se substitue au trajet direct.

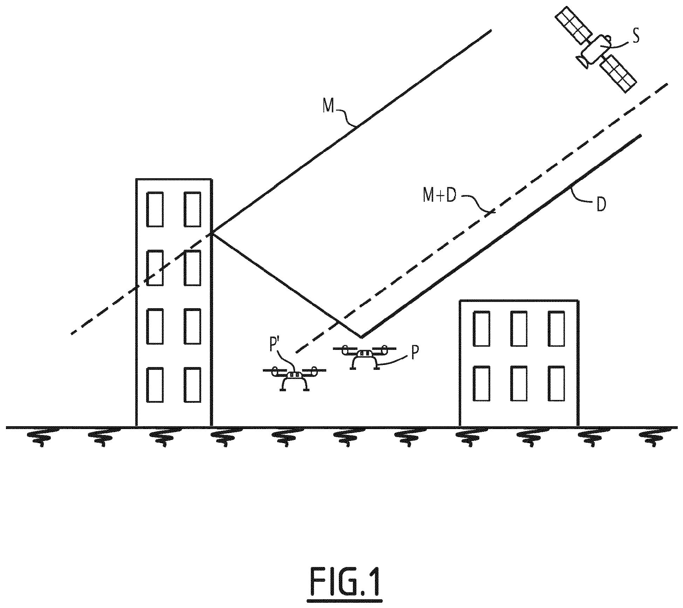

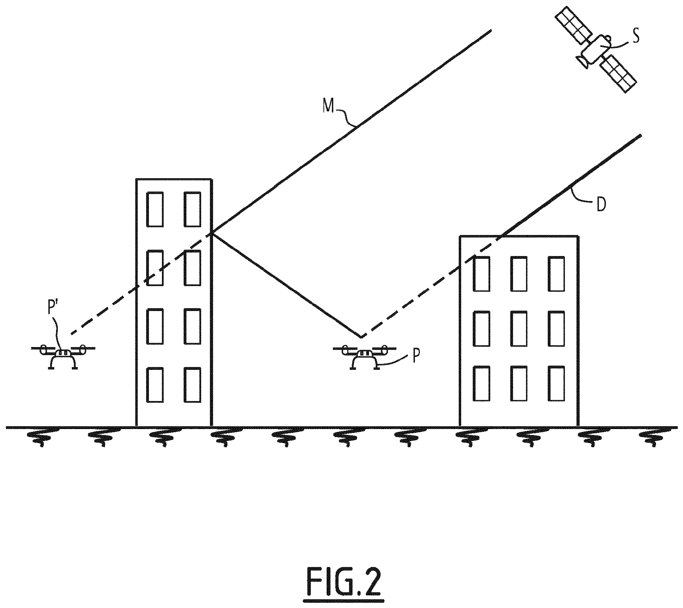

Le problème de multitrajets est notamment illustré sur les figures 1 et 2 sur lesquelles un drone ayant la position P, navigue en milieu urbain. Son récepteur GNSS exploite les signaux issus notamment d'un satellite S pour déterminer sa position.

Dans l'exemple de la figure 1, le satellite S reste visible du drone. Le trajet M des signaux GNSS issus du satellite S présente un trajet réfléchi et le trajet D présente un trajet direct. Par principe, c'est le trajet direct D qui donne la bonne mesure de distance jusqu'au satellite.

Toutefois, la combinaison des deux trajets, à savoir du trajet réfléchi M et du trajet direct D, donne un trajet apparent M+D plus long que le trajet direct D. Cela entraine alors une erreur dans la position estimée P' qui est différente de la position réelle P du drone.

Cette erreur de position est le plus souvent de quelques mètres mais dans certains cas, peut dépasser plusieurs dizaines de mètres dans des conditions défavorables.

Dans l'exemple de la figure 2, le satellite S est invisible du drone. Dans ce cas, le signal transmis via le trajet réfléchi M se substitue totalement à celui du trajet direct D.

C'est le cas le plus défavorable car la mesure est entièrement produite par le trajet réfléchi M. Dans ce cas, l'erreur de positionnement est la plus sévère et en théorie, n'est bornée que par l'environnement.

Dans l'état de la technique, on connait déjà de nombreuses méthodes permettant de détecter de multitrajets.

Parmi ces méthodes, il existe des méthodes, dites externes au récepteur, dans la mesure où la détection ou la mitigation de multitrajets s'effectue en dehors du récepteur GNSS et des méthodes, dites internes au récepteur, dans la mesure où la détection ou la mitigation de multitrajets s'effectue par le récepteur lui-même.

Parmi les méthodes du premier type, on connait notamment une méthode consistant à choisir l'antenne dont le diagramme de rayonnement est optimisé pour recevoir nominalement les satellites au-dessus d'un site donné, tout en réduisant fortement le signal des satellites en deçà, en particulier à site négatif. Toutefois, ces méthodes restent adaptées uniquement au trajet issu du sol ou bas sur l'horizon. En outre, l'antenne à diagramme de rayonnement optimisé utilisée pour mettre en œuvre une telle méthode est généralement volumineuse et lourde.

Parmi d'autres méthodes du premier type, on connait des méthodes utilisant un réseau d'antenne à diagramme de rayonnement contrôlé. Ces méthodes permettent de contrôler des directions d'intérêt et notamment de maximiser le rapport de puissance entre les signaux directs et réfléchis ou de détecter qu'un maximum de puissance est reçu dans une direction anormale.

Il existe également une variante de ces méthodes consistant à utiliser un réseau d'antenne à polarisation contrôlée. Ces dernières méthodes permettent de détecter des multitrajets en exploitant l'inversion de polarisation circulaire du signal GNSS lors d'une réflexion spéculaire.

Toutefois, dans les deux cas, les méthodes précitées impliquent une duplication des voies de traitement. En outre, ces méthodes demandent de très fortes contraintes d'égalisation des fonctions de transfert entre les voies hyperfréquence. Cela implique alors l'utilisation d'une électronique couteuse et complexe qui nécessite en pratique des calibrations complexes sur le porteur.

Parmi les méthodes du premier type, on connait également des méthodes exploitant des redondances d'informations entre un récepteur GNSS et d'autres moyens de localisation. Toutefois, par principe, ces méthodes demandent l'utilisation de moyens de localisation redondants ce qui impose de nombreuses contraintes, notamment en terme de volume, de masse ou de coût.

Il existe également des méthodes du premier type exploitant une pluralité de fréquences de signal (et/ou une pluralité de codes) par satellites. Ces méthodes exploitent le fait que statistiquement il est faiblement probable que les multitrajets soient identiques sur plusieurs fréquences ou sur plusieurs codes d'un même satellite. Toutefois, la probabilité de multitrajets non-détectés est plus faible qu'avec une fréquence et/ou un code, mais ne peut pas être très négligée pour les applications les plus exigeantes en terme d'intégrité.

Finalement, parmi les méthodes du premier type, il existe également des méthodes exploitant les redondances de mesures d'un nombre élevé de satellites d'une ou de plusieurs constellations. En particulier, ces méthodes exploitent le fait que les mesures erronées dues aux multitrajets vont paraitre incohérentes au regard de l'ensemble des autres mesures. Toutefois, ces méthodes sont peu performantes dans le cas d'un environnement où on ne peut pas exclure la probabilité de plusieurs trajets multiples simultanés, ce qui est en général le cas d'un milieu urbain.

Parmi les méthodes du deuxième type, on connait des méthodes utilisant des corrélateurs et des discriminants adaptés aux multitrajets.

D'autres méthodes de ce type exploitent la poursuite de la phase du signal GNSS.

Ces méthodes exploitent le fait que l'influence des multitrajets sur la phase est faible par principe.

Finalement, encore d'autres méthodes du deuxième type proposent de générer un mouvement maitrisé du centre de phase apparent de l'antenne et en exploitant ce mouvement maitrisé, d'adapter le traitement effectué par le récepteur.

Toutefois, l'ensemble des méthodes du deuxième type nécessitent des traitements spécifiques internes au récepteur. Cela n'est pas possible pour les récepteurs de type « boite noire ».

Des méthodes de détection de multitrajets sont également connues des documents WO 2017/022391 A1, US 2013/335264 A1 et US 8 164 514 B1.

La présente invention a pour but de remédier à l'ensemble des inconvénients des méthodes précitées.

En particulier, la présente invention a pour but de détecter des multitrajets de manière particulièrement efficace et simple, et cela sans intervenir dans traitements effectués par le récepteur GNSS.

À cet effet, l'invention a pour but un dispositif de détection de multitrajets de signaux GNSS, conforme à la revendication 1.

Suivant d'autres aspects avantageux de l'invention, le dispositif de détection comprend une ou plusieurs des caractéristiques des revendications 2 à 8.

L'invention a également pour objet un système de géolocalisation, conforme à la revendication 9.

L'invention a également pour objet un procédé de détection de multitrajets de signaux GNSS, conforme à la revendication 10.

Ces caractéristiques et avantages de l'invention apparaitront dans la lecture de la description qui va suivre, donnée à titre d'exemple non limitative, est faite en référence aux dessins annexés, sur lesquels :
- [Fig 1] [Fig 2] les figures 1 et 2 sont des vues schématiques expliquant le problème de multitrajets lors de la géolocalisation d'un porteur en milieu urbain ;
- [Fig 3] la figure 3 est une vue schématique d'un système de géolocalisation d'un porteur selon l'invention, le système de géolocalisation comprenant notamment un dispositif de détection selon l'invention et deux antennes dans l'exemple de cette figure ;
- [Fig 4] la figure 4 est une vue schématique de la disposition des antennes de la figure 3 ;
- [Fig 5] la figure 5 est un organigramme d'un procédé de détection mis en œuvre par le dispositif de détection de la figure 3 ;
- [Fig 6] la figure 6 est une vue schématique expliquant le fonctionnement du dispositif de détection de la figure 3.

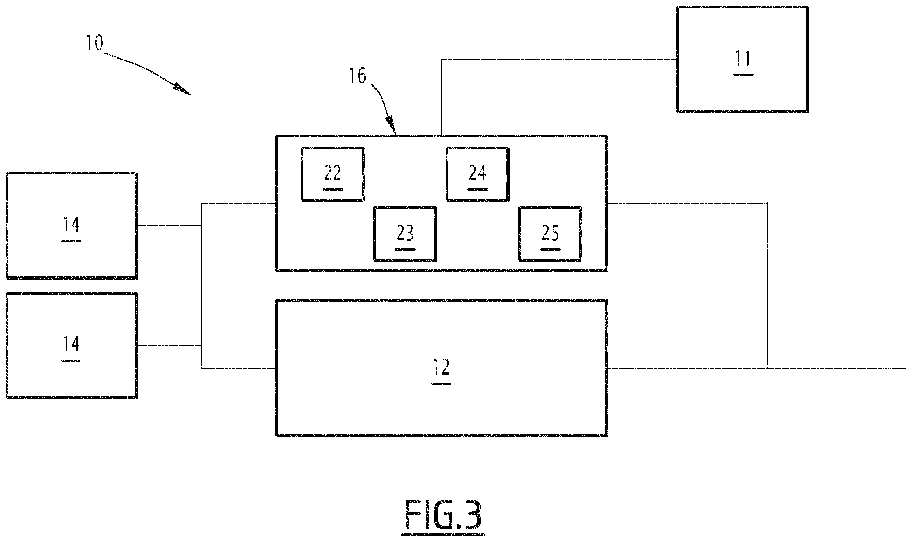

Le système de géolocalisation 10 de la figure 3 permet de géolocaliser un porteur dans lequel ce système est embarqué.

Le porteur présente par exemple un aéronef, tel qu'un drone, se déplaçant dans l'espace selon trois dimensions, ou alors un véhicule terrestre ou maritime se déplaçant dans un plan selon deux dimensions, ou alors par exemple, un véhicule ferroviaire se déplaçant selon une seule direction en suivant une voie ferrée.

Le porteur comprend notamment un dispositif de mesure inertielle 11.

Ce module de mesure inertielle 11 permet de fournir des valeurs décrivant l'attitude du porteur.

En particulier, ce module de mesure inertielle 11 permet de fournir au système de géolocalisation 10 des valeurs décrivant l'attitude du porteur qui comprennent notamment le cap, le roulis et le tangage de celui-ci.

Le système de géolocalisation 10 comprend un récepteur GNSS 12, une ou plusieurs antennes 14 et un dispositif de détection de multitrajets 16.

La ou chaque antenne 14 est connue en soi et permet notamment de recevoir des signaux GNSS issus d'un ou de plusieurs systèmes globaux de positionnement par satellite, tels que par exemple le système GPS, Galileo ou GLONASS.

En particulier, comme cela est connu en soi, la ou chaque antenne 14 définit un centre de phase et un plan d'arrivée des signaux GNSS.

La position de la ou de chaque antenne 14 est connue à tout moment dans un repère du porteur. Cela signifie en particulier que les positions du plan d'arrivée et du centre de phase de la ou de chaque antenne 14 sont également connues dans le même repère.

Le nombre d'antennes 14 est choisi selon les exemples de réalisation décrits en détail par la suite.

En particulier, selon un premier exemple de réalisation (non-illustré sur les figures), une seule antenne 14 est utilisée. Cette antenne 14 peut être mobile dans le repère du porteur ou fixe. Lorsque l'antenne 14 est mobile, elle est par exemple montée sur un actionneur prévu à cet effet.

Selon cet exemple de réalisation, le terme « centre de phase apparent » utilisé par la suite désigne le centre de phase de cette antenne 14.

Selon un deuxième exemple de réalisation (illustré sur les figures), plusieurs antennes 14 sont utilisées. Chacune de ces antennes 14 présente par exemple une antenne fixe dans le repère du porteur.

Selon cet exemple de réalisation, le terme « centre de phase apparent » désigne le centre de phase de l'antenne 14 active en instant donné ou lorsque plusieurs antennes sont actives en même instant et les signaux issus de ces antennes sont superposés, le centre de phase obtenu après la superposition des centres de phase de ces antennes 14 actives.

Dans l'exemple de la figure 3, deux antennes 14 sont illustrées.

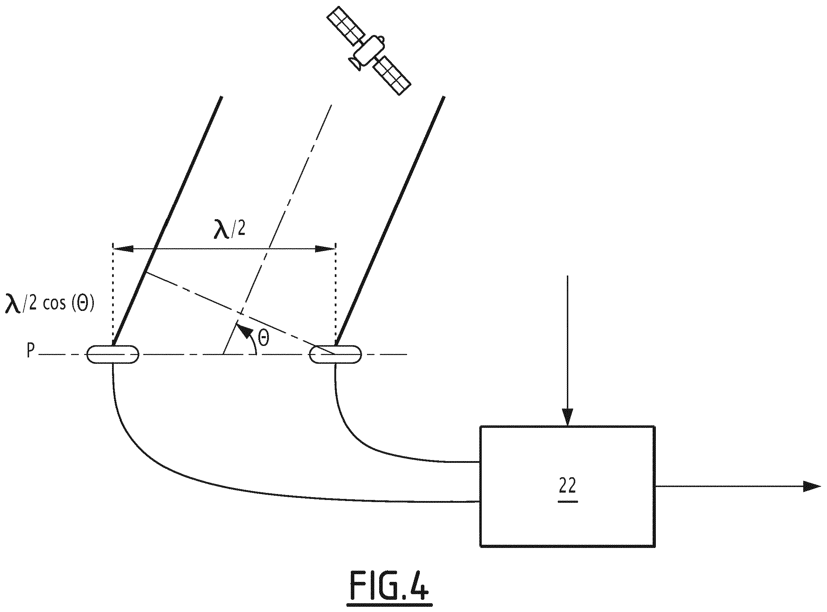

Les positions respectives de ces antennes 14 sont illustrées plus en détail sur la figure 4.

En particulier, dans l'exemple de cette figure 4, les antennes 14 sont disposées dans un même plan P de sorte que les plans d'arrivée de ces antennes coïncident.

En outre, les antennes 14 sont éloignées l'une de l'autre, d'une demi longueur d'onde des signaux GNSS.

Cela signifie que les antennes 14 sont éloignées l'une de l'autre de quelques centimètres à une dizaine de centimètres.

Il est possible d'éloigner les antennes 14 l'une de l'autre selon une autre distance. De préférence, cette distance est inférieure à une longueur d'onde des signaux GNSS.

La connaissance de cette distance permet de déterminer le déphasage des signaux GNSS reçus par ces antennes 14.

Le récepteur GNSS 12 est connu en soi.

En particulier, comme cela est visible sur la figure 3, ce récepteur 12 est connecté aux antennes 14 pour recevoir des signaux GNSS reçus par ces antennes 14.

De manière connue en soi, à partir de ces signaux reçus, le récepteur GNSS 12 permet de déterminer une solution de navigation et notamment, la position du porteur dans un repère terrestre.

La position est déterminée de manière connue en soi, notamment en appliquant un filtrage des signaux reçus de la part des antennes 14, en faisant des corrélations ainsi que d'autres types de traitement de ces signaux.

Le récepteur GNSS 12 est apte en outre à fournir une valeur observable.

Selon un exemple de réalisation, la valeur observable présente une mesure de phase ou d'une pseudo-vitesse d'un satellite donné.

Selon un autre exemple de réalisation, la valeur observable présente une mesure de la vitesse résolue à partir des pseudo-vitesses.

La vitesse résolue présente ainsi la vitesse du porteur déterminée dans un repère terrestre.

Le dispositif de détection 16 permet de déterminer des multitrajets des signaux GNSS reçus par les antennes 14 en analysant notamment la valeur observable issue du récepteur GNSS 12.

Lorsque des multitrajets sont détectés, le dispositif de détection 16 permet par exemple d'émettre une alerte qui est par exemple destinée à un système de contrôle de position du porteur.

À la réception d'une telle alerte, ce système de contrôle de position permet par exemple d'alerter un pilote (ou utilisateur) du porteur ou de désactiver au moins temporairement le calcul de la position effectué par le récepteur GNSS 12.

En référence à la figure 3, le dispositif de détection 16 comprend un module de mis en mouvement 22, un module de commande 23, un module de prédiction 24 et un module de détection d'anomalie 25.

Chacun de ces modules 22 à 25 se présente par exemple sous forme d'un logiciel mis en œuvre par un calculateur adapté et/ou au moins partiellement sous la forme matérielle, par exemple sous la forme d'un circuit logique programmable de type FPGA (de l'anglais « Field-programmable Gate Array »).

Le module de mis en mouvement 22 permet d'engendrer un mouvement du centre de phase apparent de la ou des antennes 14 selon une loi de commande prédéterminée.

Selon le premier exemple de réalisation, c'est-à-dire lorsque le système 10 comprend une seule antenne 14, le mouvement engendré par ce module 22 est de nature mécanique.

Autrement dit, dans ce cas, le module de mis en mouvement 22 permet de contrôler soit l'actionneur mécanique sur lequel l'antenne 14 est montée lorsqu'il s'agit d'une antenne mobile, soit au moins un actionneur du porteur lui-même pour déplacer le porteur lorsqu'il s'agit d'une antenne fixe. En variante, lorsqu'il s'agit d'une antenne mobile, le module de mis en mouvement 22 permet de contrôler simultanément l'actionneur de cette antenne et au moins un actionneur du porteur.

Selon le deuxième exemple de réalisation, c'est-à-dire lorsque le système 10 comprend au moins deux antennes 14, le module de mis en mouvement 22 est apte à engendrer un mouvement du centre de phase apparent des antennes 14 de manière électrique.

En d'autres mots, dans ce cas, les positions physiques des antennes 14 ne sont pas modifiées mais la transmission des signaux GNSS reçus par ces antennes est commutée selon la loi de commande.

Dans ce cas, le module de mis en mouvement 22 se présente alors sous la forme d'un commutateur dont la commutation est contrôlée selon la loi de commande.

Le module de commande 23 permet de déterminer la loi de commande. Cette loi est déterminée en fonction du mouvement souhaité du centre de phase apparent de la ou des antennes 14.

Ce mouvement est non-orthogonal aux multitrajets et choisi dans la ou les directions dans lesquelles l'occurrence et/ou les conséquences des multitrajets sont les plus importantes.

En particulier, lorsque le porteur se déplace le long d'un axe (comme un train), le mouvement du centre de phase apparent devrait être aussi s'effectuer selon le même axe (une erreur de multitrajet sur l'axe vertical ou l'axe transversal n'étant pas des événements redoutés).

Lorsque le porteur se déplace le long de deux axes, par exemple dans un plan horizontal (comme par exemple une voiture), le mouvement du centre de phase apparent devrait être effectué aussi dans un plan horizontal.

Finalement, lorsque le porteur se déplace dans tout l'espace (comme par exemple un aéronef), le mouvement du centre de phase apparent devrait être effectué aussi selon toutes les directions.

En outre, la loi de commande est choisie en fonction de la nature du mouvement engendré par le module de mis en mouvement 22.

Par exemple, lorsqu'il s'agit d'un mouvement électrique, la loi de commande présente par exemple un signal pseudo-aléatoire de fréquence d'environ 1 Hz qui est suffisamment rapide pour garantir un temps d'alerte de quelques secondes et est suffisamment lent pour générer un transitoire de la valeur observable.

Le module de prédiction 24 est configuré pour déterminer à chaque instant une prédiction de la valeur observable fournie par le récepteur GNSS 12 au même instant.

Ces prédictions sont calculées en utilisant une fonction de transfert reproduisant le fonctionnement du récepteur GNSS 12.

En particulier, ce module de prédiction est apte à déterminer lesdites prédictions à partir de la loi de commande déterminée par le module de commande 23 et des directions d'arrivée des trajets directs des signaux GNSS par rapport au plan d'arrivée de chaque antenne.

Les directions d'arrivée des trajets directs des signaux GNSS par rapport aux plans d'arrivée des antennes 14 sont notamment déterminées en utilisant les valeurs décrivant l'attitude du porteur et des directions absolues d'arrivée des trajets directs. Ces directions d'arrivées des trajets directs sont visibles sur la figure 4 sur laquelle elles forment l'angle *θ* avec le plan d'arrivée des antennes 14.

Les valeurs décrivant l'attitude du porteur sont issues du module de mesure inertielle 11.

Les directions absolues d'arrivée des trajets directs sont déterminées en connaissant une position approximative du porteur dans le repère terrestre et en analysant les almanachs et les éphémérides des satellites correspondants du système GNSS dans cette position.

Cela permet alors de déterminer la projection des directions d'arrivée des trajets directs dans le repère du porteur.

En outre, lorsque le mouvement du centre de phase apparent est atteint par commutation des signaux issus de plusieurs antennes 14 ou par mouvement mécanique de ces antennes, le déphasage des signaux lié à la disposition de ces antennes ainsi que des différences en temps de transmission de ces signaux jusqu'au récepteur GNSS 12 peuvent être pris en compte.

Le module détection d'anomalie 25 permet de détecter des multitrajets par l'analyse à chaque instant de la valeur observable issue du récepteur GNSS 12 et de la prédiction lui correspondante qui est calculée par le module de prédiction 24.

En particulier, le module de détection d'anomalie 25 est configuré pour analyser un résidu obtenu après une soustraction de la prédiction obtenue par le module de prédiction 24 à la valeur observable correspondante issue du récepteur GNSS 12.

Autrement dit, le résidu obtenu par le module détection d'anomalie 25 présente la valeur observable qui est exempte de transitoire généré par le module de mise en mouvement 22.

Ainsi, le module de détection d'anomalie 25 permet de détecter une anomalie en analysant ce résidu et en particulier en comparant ce résidu avec un seuil prédéterminé.

Pour ce faire, le module de détection d'anomalie 25 peut comparer ce résidu par exemple avec la loi de commande généré par le module 23.

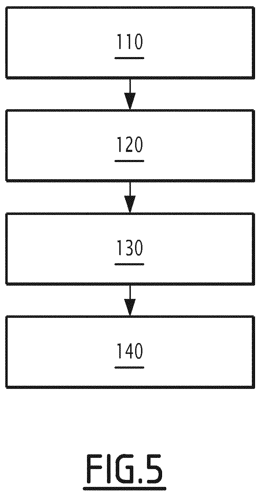

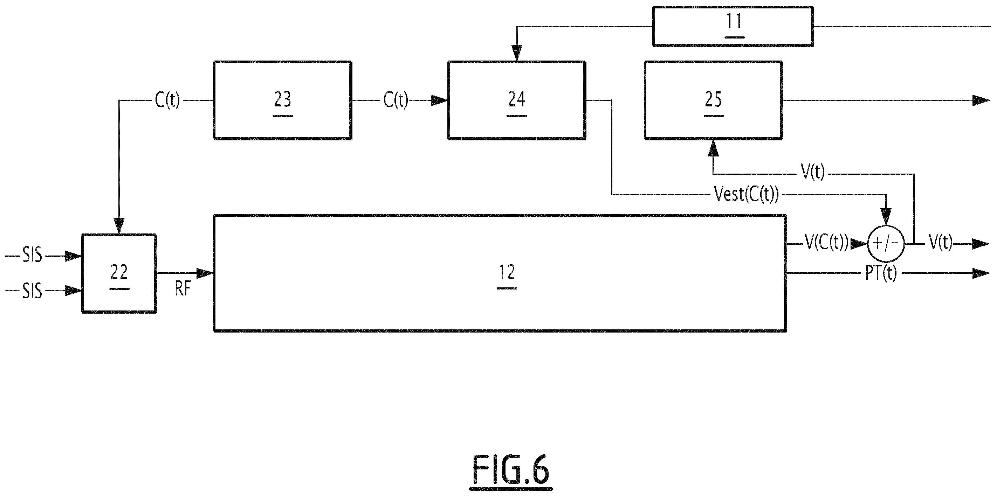

Le procédé de détection mis en œuvre par le dispositif de détection 16 selon l'invention sera désormais expliqué en référence à la figure 5 présentant un organigramme de ce procédé et à la figure 6 expliquant le fonctionnement de ce dispositif 16.

Lors d'une étape initiale 110, le module de commande 23 détermine une loi de commande C(t).

Comme expliqué précédemment, cette loi de commande C(t) est déterminée en fonction du mouvement souhaité du centre de phase apparent ainsi que de la nature du module de mise en mouvement 22.

L'étape 110 est par exemple mise en œuvre préalablement à l'utilisation du système de géolocalisation 10 dans le porteur.

Les étapes suivantes sont mises en œuvre lorsque le récepteur GNSS 12 est en cours de fonctionnement et détermine la valeur observable *V* et la position du porteur *PT.*

En particulier, lors de l'étape 120, le module de mise en mouvement 22 met en mouvement le centre de phase apparent selon la loi de commande *C*(*t*) déterminée par le module de commande 23.

Cela modifie la valeur observable *V* déterminée par le récepteur 12 qui devient alors dépendante de la loi de commande *C*(*t*). Autrement dit, *V = V*(*C*(*t*)).

Lors de l'étape 130 suivante, le module de prédiction 24 détermine à chaque instant la prédiction *Vₑₛₜ*(*C*(*t*)) de la valeur observable fournie par le récepteur GNSS 12 à ce même instant.

Comme indiqué précédemment, cette prédiction *Vₑₛₜ*(*C*(*t*)) est déterminée par le module de prédiction 24 à partir des directions d'arrivée des trajets directs des signaux GNSS par rapport au(x) plan(s) d'arrivée de la ou des antennes 14.

Lors de l'étape 140 suivante, le module de détection d'anomalie 25 analyse la valeur observable *V*(*C*(*t*)) fournie par le récepteur GNSS 12 et la prédiction *Vₑₛₜ*(*C*(*t*)) correspondante fournie par le module de prédiction 24.

Pour ce faire, comme cela a été expliqué précédemment, le module de détection 25 soustrait par exemple à la valeur observable *V*(*C*(*t*)) fournie par le récepteur GNSS 12 la prédiction *Vₑₛₜ*(*C*(*t*)) calculée par le module 24.

Ensuite, le module de détection d'anomalie 25 analyse le résidu *V*(*t*) obtenu suite à la soustraction et compare ce résidu avec un seuil prédéterminé.

Lorsque ce résidu dépasse ledit seuil, le module de détection d'anomalie 25 émet alors une alerte qui est, comme expliqué précédemment, destinée à l'opérateur ou à tout autre système de pilotage du porteur.

On conçoit alors que la présente invention présente un certain nombre d'avantages.

Tout d'abord, il est clair que l'invention permet de détecter des multitrajets en utilisant seulement des valeurs observables issues d'un récepteur GNSS.

Ainsi, l'invention peut être utilisée avec tout récepteur pouvant fournir une telle valeur observable et cela sans intervenir dans le traitement effectué à l'intérieur du récepteur GNSS.

De plus, par rapport aux méthodes de l'état de la technique du premier type, le dispositif de détection selon l'invention est de structure simple et permet de détecter des multitrajets de manière efficace.

## Revendications

1. Dispositif de détection (16) de multitrajets de signaux GNSS pour un récepteur GNSS (12) embarqué dans un porteur, le porteur comprenant en outre une ou plusieurs antennes (14) définissant un centre de phase apparent et au moins un plan d'arrivée des signaux GNSS, la ou chaque antenne (14) étant apte à recevoir des signaux GNSS se propageant selon des trajets directs ou indirects et à les transmettre au récepteur GNSS (12), le récepteur GNSS (12) étant apte à fournir une valeur observable déterminée à partir des signaux reçus par la ou chaque antenne (14) ;
le dispositif de détection (16) comprenant :
- un module de mise en mouvement (22) configuré pour engendrer un mouvement du centre de phase apparent selon une loi de commande prédéterminée, la loi de commande étant déterminée en fonction d'un mouvement non-orthogonal aux multitrajets et choisi dans la ou les directions dans lesquelles l'occurrence et/ou les conséquences des multitrajets sont les plus importantes ;
- un module de commande (23) configuré pour déterminer la loi de commande ;
- un module de prédiction (24) configuré pour déterminer à chaque instant une prédiction de la valeur observable fournie par le récepteur GNSS (12) au même instant, à partir de la loi de commande et de directions d'arrivée des trajets directs des signaux GNSS par rapport au ou à chaque plan d'arrivée ;
- un module de détection d'anomalie (25) configuré pour détecter des multitrajets des signaux GNSS reçus par le récepteur GNSS (12), par comparaison de la valeur observable issue du récepteur GNSS (12) avec la prédiction lui correspondante.

2. Dispositif de détection (16) selon la revendication 1, dans lequel, lorsque le porteur comprend au moins deux antennes (14), le module de mise en mouvement (22) est un commutateur apte à commuter la transmission au récepteur GNSS (12) des signaux reçus par les antennes (14), pour engendrer un mouvement électrique du centre de phase apparent selon la loi de commande.

3. Dispositif de détection (16) selon la revendication 1, dans lequel le module de mise en mouvement (22) est apte à contrôler au moins un actionneur mécanique du porteur et/ou de la ou de chaque antenne (14), pour engendrer un mouvement mécanique du centre de phase apparent selon la loi de commande.

4. Dispositif de détection (16) selon l'une quelconque des revendications précédentes, dans lequel les directions d'arrivée des trajets directs des signaux GNSS par rapport au ou à chaque plan d'arrivée sont déterminées à partir des directions absolues d'arrivée de ces trajets et de valeurs décrivant l'attitude du porteur.

5. Dispositif de détection (16) selon la revendication 4, dans lequel les valeurs décrivant l'attitude du porteur comprennent le cap, le roulis et le tangage du porteur.

6. Dispositif de détection (16) selon l'une quelconque des revendications précédentes, dans lequel le module de détection d'anomalie (25) est configuré pour analyser un résidu obtenu après une soustraction de la prédiction obtenue par le module de prédiction (24) à la valeur observable correspondante, pour détecter des multitrajets des signaux GNSS.

7. Dispositif de détection (16) selon la revendication 6, dans lequel le module de détection d'anomalie (25) est configuré pour comparer ledit résidu avec la loi de commande.

8. Dispositif de détection (16) selon l'une quelconque des revendications précédentes, dans lequel la valeur observable est une mesure de phase ou de pseudo-vitesse d'un satellite donné ou une mesure de la vitesse résolue du porteur.

9. Système de géolocalisation (10) d'un porteur, comprenant :
- un récepteur GNSS (12) apte à fournir une valeur observable ;
- une ou plusieurs antennes (14) définissant un centre de phase apparent et au moins un plan d'arrivée, la ou chaque antenne (14) étant apte à recevoir des signaux GNSS se propageant selon des trajets directs ou indirects et à les transmettre au récepteur (12) pour fournir la valeur observable ;
- un dispositif de détection (16) de multitrajets de signaux GNSS, selon l'une quelconque des revendications précédentes.

10. Procédé de détection de multitrajets de signaux GNSS pour un récepteur GNSS (12) embarqué dans un porteur, le porteur comprenant en outre une ou plusieurs antennes (14) définissant un centre de phase apparent et au moins un plan d'arrivée, la ou chaque antenne (14) étant apte à recevoir des signaux GNSS se propageant selon des trajets directs ou indirects et à les transmettre au récepteur (12), le récepteur GNSS (12) étant apte à fournir une valeur observable déterminée à partir des signaux reçus par la ou chaque antenne (14) ;
le procédé de détection comprenant les étapes suivantes :
- détermination (110) d'une loi de commande ;
- mise en mouvement (120) du centre de phase apparent selon la loi de commande, la loi de commande étant déterminée en fonction d'un mouvement non-orthogonal aux multitrajets et choisi dans la ou les directions dans lesquelles l'occurrence et/ou les conséquences des multitrajets sont les plus importantes ;
- détermination (130) à chaque instant d'une prédiction de la valeur observable fournie par le récepteur GNSS (12) au même instant, à partir de la loi de commande et des directions d'arrivée des trajets directs des signaux GNSS par rapport au ou à chaque plan d'arrivée ;
- détection (140) des multitrajets des signaux GNSS reçus par le récepteur GNSS (12), par comparaison de la valeur observable issue du récepteur GNSS (12) avec la prédiction lui correspondante.

## Patentansprüche

1. Erkennungsvorrichtung (16) von Mehrwegen von GNSS-Signalen für einen GNSS-Empfänger (12), der in einem Träger mitgeführt ist, wobei der Träger ferner eine oder mehrere Antennen (14) umfasst, die ein scheinbares Phasenzentrum und mindestens eine Ankunftsebene der GNSS-Signale definieren, wobei die oder jede Antenne (14) geeignet ist, GNSS-Signale zu empfangen, die sich entlang direkter oder indirekter Wege ausbreiten, und sie an den GNSS-Empfänger (12) zu übertragen, wobei der GNSS-Empfänger (12) geeignet ist, einen beobachtbaren Wert bereitzustellen, der aus den durch die oder jede Antenne (14) empfangenen Signalen bestimmt wird;
wobei die Erkennungsvorrichtung (16) umfasst :
- ein Modul zum Inbewegungsetzen (22), das konfiguriert ist, um eine Bewegung des scheinbaren Phasenzentrums gemäß einem vorbestimmten Steuerungsgesetz zu erzeugen, wobei das Steuerungsgesetz in Abhängigkeit von einer Bewegung bestimmt wird, die nicht orthogonal zu den Mehrwegen ist und in der oder den Richtungen gewählt ist, in denen das Auftreten und/oder die Folgen der Mehrwege am wichtigsten sind ;
- ein Steuermodul (23), das konfiguriert ist, um das Steuerungsgesetz zu bestimmen ;
- ein Vorhersagemodul (24), das konfiguriert ist, um zu jedem Zeitpunkt eine Vorhersage des beobachtbaren Werts zu bestimmen, der durch den GNSS-Empfänger (12) zu demselben Zeitpunkt bereitgestellt wird, ausgehend von dem Steuerungsgesetz und von Ankunftsrichtungen der direkten Wege der GNSS-Signale in Bezug auf die oder jede Ankunftsebene ;
- ein Anomaliedetektionsmodul (25), das konfiguriert ist, um Mehrwege der durch den GNSS-Empfänger (12) empfangenen GNSS-Signale zu detektieren, durch Vergleich des vom GNSS-Empfänger (12) stammenden beobachtbaren Werts mit der ihm entsprechenden Vorhersage.

2. Erkennungsvorrichtung (16) nach Anspruch 1, bei der, wenn der Träger mindestens zwei Antennen (14) umfasst, das Modul zum Inbewegungsetzen (22) ein Umschalter ist, der geeignet ist, die Übertragung der durch die Antennen (14) empfangenen Signale an den GNSS-Empfänger (12) umzuschalten, um eine elektrische Bewegung des scheinbaren Phasenzentrums gemäß dem Steuerungsgesetz zu erzeugen.

3. Erkennungsvorrichtung (16) nach Anspruch 1, bei der das Modul zum Inbewegungsetzen (22) geeignet ist, mindestens einen mechanischen Aktuator des Trägers und/oder der oder jeder Antenne (14) zu steuern, um eine mechanische Bewegung des scheinbaren Phasenzentrums gemäß dem Steuerungsgesetz zu erzeugen.

4. Erkennungsvorrichtung (16) nach einem beliebigen der vorhergehenden Ansprüche, bei der die Ankunftsrichtungen der direkten Wege der GNSS-Signale in Bezug auf die oder jede Ankunftsebene ausgehend von den absoluten Ankunftsrichtungen dieser Wege und von Werten, die die Lage des Trägers beschreiben, bestimmt werden.

5. Erkennungsvorrichtung (16) nach Anspruch 4, bei der die Werte, die die Lage des Trägers beschreiben, den Kurs, das Rollen und das Nicken des Trägers umfassen.

6. Erkennungsvorrichtung (16) nach einem beliebigen der vorhergehenden Ansprüche, bei der das Anomaliedetektionsmodul (25) konfiguriert ist, um ein Residuum zu analysieren, das nach einer Subtraktion der durch das Vorhersagemodul (24) erhaltenen Vorhersage von dem entsprechenden beobachtbaren Wert erhalten wird, um Mehrwege der GNSS-Signale zu detektieren.

7. Erkennungsvorrichtung (16) nach Anspruch 6, bei der das Anomaliedetektionsmodul (25) konfiguriert ist, um das genannte Residuum mit dem Steuerungsgesetz zu vergleichen.

8. Erkennungsvorrichtung (16) nach einem beliebigen der vorhergehenden Ansprüche, bei der der beobachtbare Wert eine Phasenmessung oder Pseudogeschwindigkeitsmessung eines gegebenen Satelliten oder eine Messung der aufgelösten Geschwindigkeit des Trägers ist.

9. Geolokalisierungssystem (10) eines Trägers, umfassend :
- einen GNSS-Empfänger (12), der geeignet ist, einen beobachtbaren Wert bereitzustellen ;
- eine oder mehrere Antennen (14), die ein scheinbares Phasenzentrum und mindestens eine Ankunftsebene definieren, wobei die oder jede antenna (14) geeignet ist, GNSS-Signale zu empfangen, die sich entlang direkter oder indirekter Wege ausbreiten, und sie an den Empfänger (12) zu übertragen, um den beobachtbaren Wert bereitzustellen ;
- eine Erkennungsvorrichtung (16) von Mehrwegen von GNSS-Signalen, nach einem beliebigen der vorhergehenden Ansprüche.

10. Verfahren zur Detektion von Mehrwegen von GNSS-Signalen für einen GNSS-Empfänger (12), der in einem Träger mitgeführt ist, wobei der Träger ferner eine oder mehrere Antennen (14) umfasst, die ein scheinbares Phasenzentrum und mindestens eine Ankunftsebene definieren, wobei die oder jede antenna (14) geeignet ist, GNSS-Signale zu empfangen, die sich entlang
direkter oder indirekter Wege ausbreiten und sie an den Empfänger (12) zu übertragen, wobei der GNSS-Empfänger (12) geeignet ist, einen beobachtbaren Wert bereitzustellen, der aus den durch die oder jede Antenne (14) empfangenen Signalen bestimmt wird ;
wobei das Verfahren zur Detektion die folgenden Schritte umfasst :
- Bestimmung (110) eines Steuerungsgesetzes ;
- Inbewegungsetzen (120) des scheinbaren Phasenzentrums gemäß dem Steuerungsgesetz, wobei das Steuerungsgesetz in Abhängigkeit von einer Bewegung bestimmt wird, die nicht orthogonal zu den Mehrwegen ist und in der oder den Richtungen gewählt ist, in denen das Auftreten und/oder die Folgen der Mehrwege am wichtigsten sind ;
- Bestimmung (130) zu jedem Zeitpunkt einer Vorhersage des beobachtbaren Werts, der durch den GNSS-Empfänger (12) zu demselben Zeitpunkt bereitgestellt wird, ausgehend von dem Steuerungsgesetz und von den Ankunftsrichtungen der direkten Wege der GNSS-Signale in Bezug auf die oder jede Ankunftsebene ;
- Detektion (140) der Mehrwege der durch den GNSS-Empfänger (12) empfangenen GNSS-Signale, durch Vergleich des vom GNSS-Empfänger (12) stammenden beobachtbaren Werts mit der ihm entsprechenden Vorhersage.

## Claims

1. A GNSS signal multipath detection device (16) for a GNSS receiver (12) on-board a carrier, the carrier further comprising one or a plurality of antennas (14) defining an apparent phase center and at least one plane of arrival of the GNSS signals, the or each antenna (14) being apt to receive GNSS signals propagating along either direct or indirect paths and to transmit same to the GNSS receiver (12), the GNSS receiver (12) being apt to supply an observable value determined from the signals received by the or each antenna (14);
the detection device (16) comprising:
- a movement generation module (22) configured for generating a motion of the apparent phase center according to a predetermined control law, the control law being determined according to a motion not orthogonal to the multipaths, the motion being chosen along the direction or directions wherein the occurrence and/or consequences of the multipaths are most important ;
- a control module (23) configured for determining the control law;
- a prediction module (24) configured for determining, at each instant, a prediction of the observable value provided by the GNSS receiver (12) at the same instant, from the control law and directions of arrival of the direct paths of the GNSS signals with respect to the or each plane of arrival;
- an anomaly detection module (25) configured for detecting multipaths of GNSS signals received by the GNSS receiver (12), by comparing the observable value from the GNSS receiver (12) with the corresponding prediction thereof.

2. A detection device (16) according to claim 1, wherein, when the carrier comprises at least two antennas (14), the movement generation module (22) is a switch apt to switch the transmission to the GNSS receiver (12) of the signals received by the antennas (14), so as to generate an electrical movement of the apparent phase center according to the control law.

3. The detection device (16) according to claim 1, wherein the movement generation module (22) is apt to control at least one mechanical actuator of the carrier and/or of the or each antenna (14), so as to generate a mechanical movement of the apparent phase center according to the control law.

4. The detection device (16) according to any of the preceding claims, wherein the directions of arrival of the direct paths of the GNSS signals with respect to the or each plane of arrival are determined from the absolute directions of arrival of the paths and from values describing the attitude of the carrier.

5. The detection device (16) according to claim 4, wherein the values describing the attitude of the carrier include the heading, roll and pitch of the carrier.

6. The detection device (16) according to any of the preceding claims, wherein the anomaly detection module (25) is configured for analyzing a residue obtained after subtracting the prediction obtained by the prediction module (24) from the corresponding observable value, so as to detect multipaths of the GNSS signals.

7. The detection device (16) according to claim 6, wherein the anomaly detection module (25) is configured for comparing said residue with the control law.

8. The detection device (16) according to any of the preceding claims, wherein the observable value is a measurement of phase or of pseudo-velocity of a given satellite or a measurement of the resolved velocity of the carrier.

9. A geolocation system (10) for a carrier, comprising:
- a GNSS receiver (12) apt to provide an observable value;
- one or a plurality of antennas (14) defining an apparent phase center and at least one plane of arrival, the or each antenna (14) being able to receive GNSS signals propagating along direct or indirect paths and to transmit them to the receiver (12) to provide the observable value; and
- a detection device (16) for multipaths of GNSS signals, according to any of the preceding claims.

10. A method for detecting multi-paths of GNSS signals for a GNSS receiver (12) on-board a carrier, the carrier further comprising one or a plurality of antennas (14) defining an apparent phase center and at least one plane of arrival, the or each antenna (14) being apt to receive GNSS signals propagating along either direct or indirect paths and to transmit same to the receiver (12), the GNSS receiver (12) being apt to supply an observable value determined from the signals received by the or each antenna (14);
the detection method comprising the following steps:
- determination (110) of a control law;
- setting in motion (120) the apparent phase center according to the control law, the control law being determined according to a motion not orthogonal to the multipaths, the motion being chosen along the direction or directions wherein the occurrence and/or consequences of the multipaths are most important;
- determination (130), at each instant, of a prediction of the observable value provided by the GNSS receiver (12) at the same instant, from the control law and directions of arrival of the direct paths of the GNSS signals with respect to the or each plane of arrival;
- detection (140) of the multipaths of the GNSS signals received by the GNSS receiver (12), by comparison of the observable value coming from the GNSS receiver (12) with the corresponding prediction thereof.
